# EUROPÄISCHE PATENTSCHRIFT

(11) **EP 0 517 281 B1**
(45) Veröffentlichungstag und Bekanntmachung des Hinweises auf die Patenterteilung: **08.02.1995**
(21) Anmeldenummer: 92109686.3
(22) Anmeldetag: 09.06.1992
(51) Int. Cl.: F16B 37/08

(54) **Befestigungshülse zum Aufstecken auf einen Gewindebolzen**
Fastening sleeve for the mounting on a threaded bolt
Manchon de fixation à monter sur un boulon fileté

(30) Priorität: 06.06.1991 DE 9106980 U
(43) Veröffentlichungstag der Anmeldung: 09.12.1992
(73) Patentinhaber: Paul Hellermann GmbH, 25421 Pinneberg (DE)
(72) Erfinder: Matschiner, Bernd, Dr.-Ing., D-2081 Kummerfeld (DE); Rathjen, Michael, D-2082 Uetersen (DE)
(74) Vertreter: Glawe, Delfs, Moll & Partner

(56) Entgegenhaltungen:
- DE-A- 3 228 475
- FR-A- 2 607 201

## Beschreibung

Befestigungshülsen, die entgegen der Abzugsrichtung nach innen ragende, beim Aufstecken elastisch nachgebende Zähne aufweisen, werden in der Art von Muttern oder Halteclips verwendet. Beispielsweise werden Bindeschellen oder Halteklammern aus Kunststoff einstückig mit einer solchen Hülse verbunden, um Kabel, Schläuche und dergleichen in Fahrzeugkarosserien an karosseriefesten Gewindebolzen zu befestigen. Ihre Haltesicherheit hängt nicht nur von der Belastbarkeit der Zähne, sondern auch von deren Eingriffsqualität ab. Aus der FR-A-2607201 ist eine Befestigungshülse bekannt, die auf zwei gegenüberliegenden Seiten Haltezungen mit Zähnen aufweist, deren Höhenabstand der Steigung des Gewindes entspricht, wobei die Zähne der einen Seite gegenüber denen der anderen Seite um eine halbe Steigung versetzt sind. Sämtliche Zähne sind somit gegenüber dem Bolzengewinde entweder im Eingriff oder außer Eingriff. Die Verbindung ist also nur dann gut, wenn die Zähne in den Zwischenraum zwischen zwei Gewindegängen eingreifen und sich im wesentlichen in Kontakt mit der ihnen gegenüberliegenden Gewindeflanke befinden. Wenn die Zähne jedoch aus der Montagezufälligkeit heraus auf den Außenumfang eines Gewindegangs geraten, finden sie keinen Halt. Zwar können sie nach einer gewissen axialen Verschiebung in den Zwischenraum zwischen zwei Gewindegängen einrasten; da aber die Rückstellkraft des Kunststoffmaterials nach längerem Verweilen der Zähne auf dem Außenumfang nur noch gering ist, kommt keine gute Rastverbindung mehr zustande; vielmehr ist damit zu rechnen, daß die Zähne über die folgenden Gewindegänge hinweggleiten.

Üblich ist es deshalb, die Zähne in der Befestigungshülse so anzuordnen, daß sie unterschiedliche Eingriffsstellung gegenüber dem Bolzengewinde aufweisen, damit zumindest ein Zahn bei jeder zufälligen Montagestellung in gute Eingriffsstellung gelangt. Beispielsweise werden sechs Zähne über den Umfang in einer Höhenebene gleichmäßig verteilt. Ihre Eingriffsstellung gegenüber dem Bolzengewinde unterscheidet sich dann von derjenigen des jeweils benachbarten Zahns um ein Sechstel der Gewindesteigung. Jedoch hat dies den Nachteil, daß jeweils ein Zahn den größten Teil des Abzugswiderstands aufzubringen hat, wodurch die Haltekraft beschränkt wird.

Der Erfindung liegt die Aufgabe zugrunde, die Haltekraft bei Aufrechterhaltung der Haltesicherheit zu verbessern. Die erfindungsgemäße Lösung besteht in der Merkmalskombination des Anspruchs 1. Danach werden mehrere Gruppen von Zähnen gebildet. Die Zähne, die derselben Gruppe angehören, haben jeweils gleiche Eingriffsstellung gegenüber dem Bolzengewinde. Hingegen unterscheiden sich die Eingriffsstellungen der Zähne voneinander, die unterschiedlichen Gruppen angehören. Der Höhenunterschied bezüglich der Eingriffsstellung sollte demjenigen Bruchteil der Gewindesteigung entsprechen, der der Zahl von Gruppen entspricht, nämlich beispielsweise bei zwei Gruppen einer 1/2 Gewindesteigung und bei drei Gruppen 1/3 Gewindesteigung. Die Erfahrung zeigt, daß schon ein Unterschied von einer halben Gewindesteigung genügt, um bei einer Gruppe die Sicherheit guter Eingriffsbedingungen zu schaffen. Da sich sämtliche Zähne dieser Gruppe an der Aufbringung der Haltekraft beteiligen, wird diese entsprechend vergrößert gegenüber dem Fall, in welchem lediglich ein Zahn sie aufbringen muß.

Man kann die Anordnung so bestimmen, daß jeder Zahn gegenüber den Zähnen anderer Gruppen in Umfangsrichtung versetzt angeordnet ist. In diesem Fall ist an jeder Umfangsstelle im allgemeinen nur ein Zahn vorgesehen. Wenn mehrere Zähne an derselben Umfangsstelle vorgesehen sind, so sind diese um eine Gewindesteigung in der Höhe versetzt. Bei einem bewährten Beispiel sind insgesamt sechs Zähne vorgesehen, von denen jeweils drei in einer Höhenebene und die übrigen in einer dazu um eine halbe Gewindesteigung versetzten Höhenebene angeordnet sind. Diese Anordnung bildet drei Zahngruppen, wobei jede Gruppe aus zwei einander diametral gegenüberliegenden Zähnen besteht. Die drei Gruppen sind jeweils um 60° im Umfang zueinander versetzt. Ihre Eingriffsstellungen unterscheiden sich um 1/3 der Steigung des Bolzengewindes.

Bei einer anderen Ausführungsform der Erfindung sind mehrere Zähne verschiedener Gruppen höhenversetzt an je einer elastischen Zunge angeordnet, wobei der Höhenversatz geringer als die Gewindesteigung ist und die Zähne somit unterschiedlichen Gruppen angehören.

Wenn in diesem Zusammenhang von Höhe, Höhenebene oder Höhenversatz die Rede ist, so ist stets die absolute Strecke längs der Achse der Hülse gemeint. Wird jedoch von Eingriffshöhe oder Eingriffsstellung gesprochen, so ist die relative Höhe im Verhältnis zum Gewindegang gemeint. Gleich hoch an unterschiedlichen Umfangsstellen angeordnete Zähne haben somit immer unterschiedliche Eingriffsstellung und gehören unterschiedlichen Gruppen an. Hingegen haben an unterschiedlicher Umfangsstelle befindliche Zähne mit gleicher Eingriffsstellung, die somit derselben Gruppe angehören, stets unterschiedliche Höhe.

Die Erfindung wird im folgenden näher unter Bezugnahme auf die Zeichnung erläutert, die vorteilhafte Ausführungsbeispiele zeigt. Es zeigen:

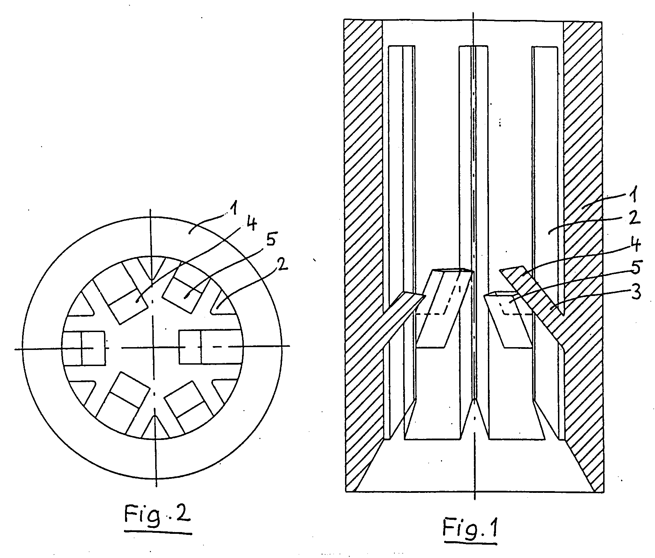

- Fig. 1 und 2: einen Längsschnitt und eine Draufsicht einer Ausführungsform mit sechs Zähnen in zwei Höhenebenen und
- Fig. 3 und 4: einen Längsschnitt und eine Draufsicht einer Ausführungsform mit mehreren Zähnen an je einer Zunge.

Die Befestigungshülsen beider Ausführungsformen bestehen aus einer zylindrischen Hülsenwand 1, sechs gleichmäßig über den Umfang verteilten, in Längsrichtung verlaufenden Führungsrippen 2 und sechs über den Umfang gleichmäßig verteilten Haltezungen 3. Während die Rippen 2 von der Hülsenwand 1 bis zu derjenigen gedachten Zylinderfläche vorragen, die etwa den Außendurchmesser des zugehörigen Bolzens hat, ragen die Spitzen der Haltezungen 3 nach innen über diese Zylinderfläche hinaus, um in die Gewindegänge des Bolzens eingreifen zu können.

Für diesen Eingriff bilden die Haltezungen 3 der ersten Ausführungsform an ihren Spitzen Zähne 4 bzw. 5. Die Zähne 4 sind in derselben Höhenebene angeordnet und im Wechsel gleichmäßig über den Umfang verteilt. Dasselbe gilt für die Zähne 5. Der Höhenabstand zwischen den Zähnen 4 und 5 beträgt eine halbe Gewindesteigung des zugehörigen Bolzens. Somit haben jeweils zwei einander gegenüberstehende Zähne gleiche Eingriffsstellung und gehören somit im Sinne der vorstehenden allgemeinen Erläuterungen derselben Gruppe an, wobei drei Gruppen zu unterscheiden sind, von denen jeweils eine bei jeder zufälligen Relativlage des Bolzens zu der Hülse eine günstige Eingriffsstellung aufweist.

Obwohl die Zähne 4, 5 sich in unterschiedlicher Höhenebene befinden, sind die sie tragenden Zungen 3 in gleicher Höhe mit der Zylinderwandung 1 der Hülse verbunden. Dies vereinfacht die Form. Die Haltesicherheit wird durch die unterschiedliche Länge der Zungen bzw. die unterschiedliche radiale Position der Zähne im entspannten Zustand nicht beeinträchtigt. Stattdessen können ihre Befestigungsstellen ebenso versetzt sein wie ihre Spitzen, so daß sie gleich lang sind.

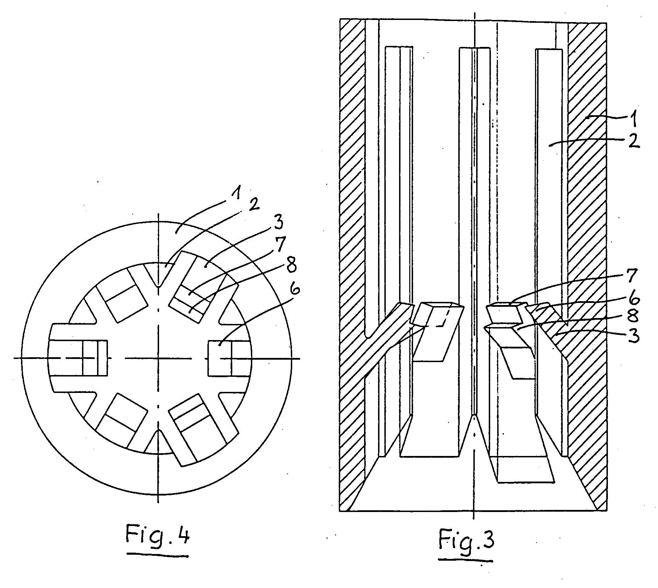

In der zweiten Ausführungsform gemäß Fig. 3 und 4 sind gleichfalls zwei unterschiedliche Sorten von Zähnen zu unterscheiden. Die Zähne 6, die gleichmäßig über den Umfang verteilt sind, sind nur einfach ausgeführt, während die dazwischenliegenden Haltezungen jeweils zwei Zähne 7, 8 tragen. Jeweils ein Zahn 6 steht einem Zahnpaar 7, 8 diametral gegenüber, wobei die Zähne 6 und 8 um eine halbe Gewindeteilung höhenversetzt sind und jeweils somit eine Gruppe bilden. Die zusätzlichen Zähne 7 erhöhen die Eingriffswahrscheinlichkeit. Wenn unter hohen Abzugskräften die hauptsächlich im Eingriff befindliche Zahngruppe sich verformt, vermögen die Zähne 7 durch zusätzlichen Eingriff die Haltekraft zu erhöhen. Ihr Höhenunterschied gegenüber den Zähnen 8 kann so gewählt sein, daß sie einer bestimmten Gruppe zugehören. Unbedingt erforderlich ist dies jedoch nicht.

## Patentansprüche

1. Befestigungsanordnung bestehend aus einem Gewindebolzen und einer darauf aufzusteckenden Befestigungshülse, die entgegen der Abzugsrichtung nach innen ragende, rastend in das Gewinde des Bolzens eingreifende Zähne (4 bis 8) enthält, die eine gleiche Eingriffsstellung gegenüber dem Bolzengewinde aufweisen, wobei n Gruppen von je mehreren gleichmäßig über den Umfang verteilten Zähnen vorgesehen sind, die untereinander eine gleiche und von den Zähnen jeder anderen Gruppe verschiedene Eingriffsstellung gegenüber dem Bolzengewinde aufweisen und wobei sich die Eingriffsstellungen der Gruppen um ein n-tel der Gewindesteigung unterscheiden.

2. Befestigungsanordnung nach Anspruch 1, dadurch gekennzeichnet, daß jeder Zahn gegenüber den Zähnen anderer Gruppen in Umfangsrichtung versetzt angeordnet ist.

3. Befestigungsanordnung nach Anspruch 2, dadurch gekennzeichnet, daß von insgesamt sechs Zähnen (4, 5) je drei (4) in einer gegenüber der Höhenebene der übrigen Zähne (5) um eine halbe Gewindesteigung versetzten Höhenebene angeordnet sind.

4. Befestigungsanordnung nach Anspruch 1, dadurch gekennzeichnet, daß mehrere Zähne (7, 8) verschiedener Gruppen höhenversetzt an je einer Zunge (3) angeordnet sind.

5. Befestigungshülse für eine Befestigungsanordnung gemäß einem der Ansprüche 1 bis 4.

## Claims

1. A fastening assembly comprising a threaded bolt and a fastening sleeve to be fitted thereon, which includes teeth (4 to 8) projecting inwardly counter to the removal direction and engaging in a locking manner in the thread of the bolt, which teeth have the same engagement position relative to the bolt thread, wherein n groups each of a plurality of teeth spaced uniformly apart over the periphery are provided, which teeth with respect to one another have a uniform engagement position and a different engagement position from the teeth of each other group relative to the bolt thread, and wherein the engagement positions of the groups differ by an nth-fraction of the thread pitch.

2. A fastening assembly according to Claim 1, characterised in that each tooth is arranged offset in peripheral direction relative to the teeth of other groups.

3. A fastening assembly according to Claim 2, characterised in that of a total of six teeth (4, 5) in each case three (4) are disposed in a horizontal plane offset by half a thread pitch in relation to the horizontal plane of the other teeth (5).

4. A fastening assembly according to Claim 1, characterised in that a plurality of teeth (7, 8) of different groups are arranged vertically offset on a respective tongue (3).

5. A fastening sleeve for a fastening assembly according to any one of Claims 1 to 4.

## Revendications

1. Dispositif de fixation, se composant d'un boulon fileté et d'un manchon de fixation destiné à être placé sur celui-ci et comportant des dents (4 à 8) qui font saillie vers l'intérieur à l'opposé de la direction d'enlèvement, s'engagent par encliquetage dans le filetage du boulon et présentent une position d'engrènement semblable par rapport au filetage du boulon, dans lequel il est prévu n groupes de plusieurs dents chacun, réparties régulièrement sur la circonférence, qui présentent entre elles, par rapport au filetage du boulon, une position d'engrènement identique et différente de celle des dents de chaque autre groupe, et en ce que les positions d'engrènement des groupes diffèrent d'un n^{ième} du pas de filetage.

2. Dispositif de fixation selon la revendication 1, caractérisé en ce que chaque dent est en position décalée dans la direction circonférentielle par rapport aux dents d'autres groupes.

3. Dispositif de fixation selon la revendication 2, caractérisé en ce que, sur six dents (4, 5) au total, trois (4) sont disposées à un niveau en hauteur qui est décalé d'un demi-pas de filetage par rapport au niveau en hauteur des autres dents (5).

4. Dispositif de fixation selon la revendication 1, caractérisé en ce que plusieurs dents (7, 8) de groupes différents sont disposées sur une languette (3) avec un décalage en hauteur.

5. Manchon de fixation pour un dispositif de fixation selon l'une quelconque des revendications 1 à 4.
